# EUROPÄISCHE PATENTANMELDUNG

(11) **EP 0 892 033 A1**
(43) Veröffentlichungstag der Anmeldung: **20.01.1999**
(21) Anmeldenummer: 97810497.4
(22) Anmeldetag: 16.07.1997
(51) Int. Cl.: C10G 73/36, B01D 9/00

(54) **Verfahren und Vorrichtung zur Gewinnung von Paraffin oder Paraffinfraktionen**

(71) Anmelder: Sulzer Chemtech AG, 8404 Winterthur (CH); Schümann Sasol GmbH & Co. KG, 20457 Hamburg (DE)
(72) Erfinder: Matzat, Norbert, Dr., 22457 Hamburg (DE); Hildebrand, Günther, Dr., 06729 Rehmsdorf (DE); Richter, Ferdinand, Dr., Hamburg (DE); Stepanski, Manfred, Dr., 9470 Buchs (CH); Lippuner, Florian, 9472 Grabs (CH); Engstler, Herbert, Frastanz (AT); Jans, Bernhard J., 9470 Buchs (CH)
(74) Vertreter: Riederer, Conrad A., Dr.

(57) **Zusammenfassung**

Verfahren zur fraktionierten Kristallisation von Paraffin aus mineralölbasischen und synthetischen Paraffingatschen, bei welchem die Gatsche mit hohem Ölanteil in einem Kristallisator, welcher in den Zwischenräumen zwischen den Wärmetauscherflächen (39) mit im Zickzack verlaufenden Lochblechen (31) ausgerüstet ist, kristallisiert werden. Dabei wird die paraffinhaltige Schmelze nur soweit verfestigt, dass die abzuleitenden Fraktionen und Öle noch flüssig verbleiben und ohne eine totale Verfestigung der Schmelze abgelassen werden. Die Lochbleche (31) stützen die Kristallisatschichten (43), wobei beim Schwitzen sich die Paraffinschicht in Streifen von der Wärmetauscherfläche (39) lösen und auf den geneigten Lochblechen (31) aufliegen soll. Die Neigung der Lochbleche (31) bewirkt eine Nachführung der Paraffinstreifen (53), so dass die Paraffinstreifen in Kontakt bleiben mit den Wärmetauscherflächen (39), indem sie auf der geneigten Fläche (30) durch das Eigengewicht gegen die Wärmetauscherflächen (39) gedrückt werden.

## Beschreibung

**Die vorliegende Erfindung betrifft** ein Verfahren zur Gewinnung Von Paraffinen oder Paraffinfraktionen aus einer paraffinhaltigen Schmelze, insbesondere aus Gatsch oder einem unterschiedliche Paraffinfraktionen aufweisenden Gemisch, bei welchem verfahren in einem mit Wärmetauschern ausgestatteten Behälter die Schmelze auf eine Temperatur unter der Schmelztemperatur der zu gewinnenden Paraffinfraktionen abgekühlt wird und flüssige niedrigschmelzende Fraktionen und Öle von durch die Abkühlung verfestigten höherschmelzenden Paraffinfraktionen abgetrennt und abgeleitet werden.

**Paraffine** sind bei Raumtemperatur feste Kohlenwasserstoffe, die aus gesättigten geraden, verzweigten und/oder ringförmigen Kohlenwasserstoffketten bestehen. Mineralölbasische Paraffine weisen etwa 20 bis 50 C-Atome, andere, insbesondere synthetische Paraffine bis zu etwa 100 C-Atome auf. Aufgrund ihrer Herkunft, z.B. aus Mineralölen unterschiedlicher Siedelagen, ist die Anzahl der C-Atome und ihr Verzweigungsgrad sehr unterschiedlich. Man unterscheidet die Paraffine nach der Erstarrungstemperatur grob zwischen tiefschmelzenden Weichparaffinen mit einem Erstarrungspunkt (Ep) zwischen ungefähr 30 und 48°C und höherschmelzenden Hartparaffinen mit einem Erstarrungspunkt zwischen ungefähr 50 und 65 °C. Weiter werden zu den Paraffinen mikrokristalline Paraffine (Mikrowachse) aus Destillationsrückständen oder schweren Destillaten paraffinbasischer Rohöle gezählt.

Die Paraffinsorten sind im Allgemeinen umso wertvoller, je höher ihr Schmelzpunkt liegt. Abhängig von ihrer Reinheit und ihrem Erstarrungspunkt werden Paraffine sehr vielseitig eingesetzt, insbesondere in der Kerzen-, Papier-, Gummi-, Verpackungs-, Textil- und Lebensmittelindustrie. Weiter werden sie auch zur Herstellung von Pflege- und Poliermitteln, kosmetischen und pharmazeutischen Produkten sowie als Latentwärmespeichermaterial verwendet.

Ausgangspunkt für die Herstellung von Paraffinen sind die in Erdölraffinerien als Nebenprodukt der Schmierölproduktion anfallenden Paraffingatsche, welche unterschiedliche Anteile flüssiger Komponenten aufweisen, aber auch durch thermische Degradation von Kunststoffen gewonnene feste Paraffinfraktionen. Der Gesamtanteil bei Raumtemperatur flüssiger Komponenten im Paraffin oder Paraffingatsch wird als Ölgehalt bezeichnet. Für das Fertigprodukt Paraffin wird je nach benötigter Qualität in der Regel ein maximaler Ölgehalt von 0,5 bis 1,5 Gewichtsprozent gefordert. Beim Fertigprodukt mit höchsten 0,5 Gewichtsprozent Ölgehalt gelten als zusätzliche Qualitätsmerkmale der Erstarrungspunkt und der Nadelpenetrationswert.

Um Paraffin hoher Qualität aus den in Raffinerien anfallenden paraffinhaltigen Fraktionen zu erhalten, sind grosstechnisch zwei grundsätzlich unterschiedliche Arten der Entölung bekannt, nämlich die ältere **Schwitzentölung** und die jüngere, effizientere **Lösemittelentölung**.

1959 wird in Asinger, F., "Chemie und Technologie der Paraffinkohlenwasserstoffe, 1. Auflage, Berlin, auf der Seite 46 zur Schwitsentölung bemerkt:
"Der Schwitzprozess ist in der Praxis schwierig zu leiten und dürfte in Zukunft durch die Lösemittel-Entölung abgelöst werden."
Tatsächlich ist man wegen der gravierenden Nachteile der Schwitzentölung von ihr abgekommen und verwendet heute vorwiegend Lösemittelverfahren. Gemäss "Ullmanns Enzyklopädie der technischen Chemie", Band 24, Seite 26, werden in den USA über 90% der bestehenden Anlagen nach dem Prinzip der Lösemittelentölung betrieben. Seit einiger Zeit werden auch keine neuen Schwitzentölungsanlagen mehr gebaut.

Die **Lösemittelentölungsverfahren**, auch Solvententölung oder Selektiventölung genannt, sind kontinuierliche Verfahren, mit denen aus allen paraffinhaltigen Schmelzen die Paraffine gewonnen und in Fraktionen zerlegt werden können. Sie verwenden Lösemittel für die Trennung von Paraffinen und Ölanteilen und gewährleisten eine bessere Paraffinausbeute als die Schwitzentölung. Lösemittelentölungen zeichnen sich durch eine hohe Flexibilität beim Einsatz unterschiedlicher Gatschqualitäten aus, indem mit der Lösemittelzusammensetzung und dem Gatsch/Lösemittel-Verhältnis auf die unterschiedlichen Gatsche eingegangen werden kann. Es werden folgende Verfahren bei der Lösemittelentölung angewendet:
1. Das **Maischverfahren**, bei welchem das Gatsch/Lösemittel-Gemisch direkt aus der Entparaffinierung mit weiterem Lösemittel angemaischt und anschliessend filtriert wird.
2. Das **Fällungsverfahren** oder Kristallisationsverfahren, bei dem der flüssige Gatsch in dem Lösemittel aufgelöst und anschliessend durch Abkühlung das feste Paraffin ausgefällt wird.
3. Das **Versprühverfahren**, bei welchem der geschmolzene Gatsch in entgegenströmende Kaltluft zu Pulver versprüht und anschliessend mit Lösemittel vermischt wird.

Die **Problematik aller Lösemittelverfahren** liegt in den umweltgefährdenden und gesundheitsschädigenden Eigenschaften der in grossen Mengen verwendeten Lösemittel (3 bis 10 Anteile Lösemittel auf einen Anteil Gatsch) sowie deren Korrosivität und leichte Entzündbarkeit. Zudem fällt ein hoher Energieaufwand für die Lösemittelrückgewinnung und die den Prozess begünstigende Kühlung an. Trotz diesen Problemen und Kostenfaktoren hat sich die Lösemittelentölung heute gegen die Schwitzentölung durchgesetzt, weil sie gegenüber der Schwitzentölung eine höhere Paraffinausbeute bei gleichzeitig grösserer Leistung der Anlage gewährleistet und weil damit auch paraffinhaltige Schmelzen mit einem höheren Anteil an mikrokristallinen Paraffinen entölt werden können.

Die **Schwitzentölung** ist das bis anhin einzige bekannte, grosstechnisch je angewendete Verfahren zur praktisch lösemittelfreien Entölung von Paraffin. Diese Eigenschaft der Schwitzentölung ist aus ökologischen Überlegungen heraus sehr zu begrüssen und wirkt sich auch auf die Anlage-, Instandhaltungs- und Bertriebskosten positiv aus. Zur Durchführung des Verfahrens werden Kammern verwendet, welche mit horizontal angeordneten Wärmetauscherspiralen oder aber mit vertikalen Wärmetauscher-Rohrbündeln und waagrechten Siebböden ausgestattet sind. In diese Kammern oder Behälter wird zuerst eine Wasservorgabe gefüllt, damit die Abläufe nicht verstopft werden, dann wird das geschmolzene Rohparaffin (der Paraffingatsch) in die Kammern gefüllt. Der Paraffingatsch schwimmt auf der Wasservorgabe. Dann lässt man das Rohparaffin unter Kühlen zu einem Block erstatten und anschliessend kann die Wasservorgabe unter dem festen, auf Wärmetauscherleitungen und/oder siebförmigen Zwischenböden ruhenden Block abgelassen werden. Während dieser Block anschliessend langsam erwärmt wird, schwitzt das Öl, und bei höherer Temperatur auch tiefschmelzende Weichparaffine, aus dem Paraffinblock aus. Die ablaufende flüssige Phase wird Ablauföl genannt. Sie kann aufgrund von Lösungsgleichgewichten hohe Anteile der an sich zu gewinnenden höherschmelzenden Paraffinanteile enthalten.

In "Ullmanns Enzyklopädie der technischen Chemie", Band 24, Seite 26, sind die **Nachteile der Schwitzentölung** wie folgt beschrieben:
"Für dieses klassische Entölungsverfahren werden wegen der geringen Selektivität (schlechtere Hartparaffinausbeuten), dem zeitaufwendigen Erwärmen, der diskontinuierlichen Fahrweise und der Nichtanwendbarkeit bei stark ölbindenen Rohparaffinen aus schweren Machinenöldestillaten keine Neuanlagen mehr gebaut. Bei den noch bestehenden Anlagen versucht man, durch partielle Rückführung der Ablauföle die Hartparaffin-Ausbeute zu verbessern."

**Es ist deshalb Aufgabe der Erfindung** ein wirtschaftliches Verfahren bereitzustellen, mit welchem ohne Zuführen von Lösemitteln eine hohe Ausbeute von hochwertigem Paraffin aus dem Paraffingatsch erreicht wird.

**Erfindungsgemäss wird dies dadurch erreicht, dass** die Temperatur der Wärmetauscherflächen während des Abkühlens der vorerst noch flüssigen Schmelze höher gewählt wird als die Schmelztemperatur eines wesentlichen Teils abzuleitender niedrigschmelzender Fraktionen und Öle, und dass nach der Bildung eines Festansatzes an den Wärmetauscherflächen aus höherschmelzenden Fraktionen die flüssig verbliebenen niedrigschmelzenden Fraktionen und Öle aus dem Behälter abgeleitet werden.

Durch den Verzicht auf Lösemittel, werden die nachstehenden Vorteile der Schwitzentölung gegenüber der Lösemittelentölung auch bei dem erfindungsgemässen Verfahren genutzt:
⇒ Keine Umwelt- und Gesundheitsgefährdung,
⇒ Keine Anlagenkorrosion, und
⇒ Erheblich niedrigere Betriebs- und Instandhaltungskosten.

Dadurch, dass die Kühltemperatur zum Abkühlen der flüssigen Schmelze und dadurch verfestigen der Fraktionen in absteigender Folge, von den höherschmelzenden zu den niedrigschmelzenden Fraktionen und allenfalls Ölen, höher gewählt wird als ein wesentlicher Teil der zur Ableitung bestimmten niedrigschmelzenden Fraktionen und Öle, werden im Wesentlichen nur diese Fraktionen verfestigt, die aus der Schmelze gewonnen werden. Die niedrigschmelzenden Fraktionen und Öle verbleiben flüssig. Daher muss zuerst in der Kühlphase und auch später in der Schwitzphase weniger Energie aufgewendet werden als bei der Schwitzentölung, bei welcher zuerst alle Fraktionen und Öle verfestigt werden und dieser Block anschliessend wieder auf die Schwitztemperatur aufgewärmt werden muss.

Vorteilhaft werden die sich verfestigenden Fraktionen in Schichten auf im Wesentlichen vertikalen oder geneigten Wärmetauscherflächen aus der Schmelze ausgeschieden. Dadurch können flüssige Fraktionen und Öle unter Nutzung der Schwerkraft ablaufen, ohne dass die Wärmetauscherflächen oder der Festansatz dabei wesentlich hinderlich sind.

Vorteilhaft werden die Schichten auf im Wesentlichen ebenflächigen Wärmetauscherflächen ausgeschieden. Solche Wärmetauscherflächen können so nebeneinander angeordnet werden, dass die dazwischen eingefüllte Schmelze kleine Maximalabstände zur Wärmetauscherfläche aufweist, dass der Behälter durchgehend lediglich Zonen mit solchen Maximalabständen aufweist und dass ein günstiges Verhältnis von Wärmetauscherflächen zu Volumen der Schmelze erreicht wird. Zudem sind die ebenflächigen Zonen zwischen den Wärmetauscherflächen mit einfachen Mittel gliederbar.

Vorteilhaft wird, wenn durch Erwärmen von durch die Abkühlung verfestigten Fraktionen niedrigschmelzende Fraktionen und Öle aus dem Festansatz ausgetrieben werden, der verbleibende Festansatz unter Nutzung seines Eigengewichts auf eine Wärmetauscherfläche zugetrieben. Dadurch bleibt der Festansatz in thermischem Kontakt mit der Wärmetauscherfläche und die Temperatur des Festansatzes kann so präziser gesteuert werden. Vorteilhaft wird der verbleibende Festansatz im Zuge der Erwärmung in voneinander gesonderte Streifen aufgelöst, wodurch sich die Oberfläche des Festansatzes vergrössert und über diese vergfösserte Oberfläche geschwitzt werden kann.

In der Praxis hat sich als zweckmässig erwiesen, dass der verbleibende Festansatz von den Wärmetauscherflächen wenigstens teilweise auf Leitelemente abgelöst wird, welche den Wärmetauscherflächen zugeneigt sind. Dadurch wird eine Vergrösserung der Oberfläche des Festansatzes und die Nachführung an die Wärmetauscherflächen durch ein Rutschen auf der Leitfläche erreicht. Zweckmässigerweise werden die Schichten durch Erwärmen der Wärmetauscherflächen (39) von diesen gelöst.

Vorteilhaft werden die durch Erwärmen des Festansatzes ausgetriebenen Bestandteile teilweise durch besondere Leitwege im Leitelement nach unten abgeleitet. Dazu ist das Leitelement perforiert oder weist Kanäle auf, durch die die flüssigen Fraktionen und/oder Öle abtropfen können. Zweckmässigerweise werden die Schichten durch die Leitelemente in Streifen aufgeteilt.

Wenn die Schmelze einen niedrigen Ölgehalt aufweist, werden vorteilhaft die Schichten (43) in solchen Stärken ausgeschieden, dass ihre Haftung an den Wärmetauscherflächen (39) beim Erwärmen ausreicht, sie zu halten. Wo dies möglich ist, ist eine fraktionierte Kristallisation ohne Leitelemente effizienter als eine solche mit entsprechenden Elementen. Vorteilhaft werden deshalb die stark ölhaltigen Schmelzen zuerst mit einem vorgängig beschriebenen Verfahren mit einer durchlässigen Struktur zwischen den Wärmetauscherflächen entölt, um danach die dadurch wenigstens teilweise entölten Fraktionen und Gemische in an den Wärmetauscherflächen haftenden Schichtstärken auszuscheiden. Ebenso ist es zweckmässig, abgelassene tiefschmelzende Fraktionen und/oder Öle erneut einem Verfahren nach einem der Ansprüche 1 bis 9 zu unterziehen. Durch diese Massnahmen werden höhere Ausbeuten und eine höhere Reinheit der gewonnen Produkte erreicht. Letzteres wird auch durch ein fraktioniertes Abschmelzen des Festansatzes erreicht.

Vorteilhaft wird die Schmelze in einen leeren, mit Wärmetauschern bestückten Behälter eingefüllt. Dadurch fallen zwei Arbeitsschritte bei der Gewinnung von Paraffin weg, nämlich das Einfüllen einer Wasservorgabe und das Ablassen dieser Vorgabe. Es wird zudem eine gegenseitig verunreinigende Berührung von Paraffin und Wasser vermieden.

Die Erfindung betrifft auch eine Vorrichtung zur Gewinnung von Paraffinen oder Paraffinfraktionen aus einer paraffinhaltigen Schmelze, bestehend aus einem mit Wärmetauschern ausgestatteten Behälter, wobei die Wärmetauscher im Wesentlichen vertikal ausgerichtete Wärmetauscherflächen aufweisen, zur Trennung von durch Kühlen der Schmelze sich an den Wärmetauscherflächen als Festansatz ahscheidenden höherschmelzenden Paraffinfraktionen von durch Erwärmen aus dem Festansatz austreibbaren niedrigschmelzenden Fraktionen und Ölen. Im erfindungsgemässen Kristallisator, bzw. der erfindungsgemässen Vorrichtung, ist zwischen den Wärmetauscherflächen eine für flüssige Bestandteile durchlässige Struktur angeordnet, welche ein Abrutschen des Festansatzes während des Erwärmens verhindert, wodurch auch abrutschende Festansätze geschwitzt werden können. Bevorzugt sind die Wärmetauscherflächen im Wesentlichen ebenflächig, damit die zwischen den Wärmetauscherflächen sich ergebenden Zonen leicht durch durchlässige Strukturen zu gliedern sind. Weil die Paraffinschichten geneigt oder bevorzugt vertikal angeordnet sind, finden die ausgeschwitzten Fraktionen und Öle an der Oberfläche der Schicht, d.h. an den Grenzflächen zwischen Paraffinschicht und Wärmetauscherfläche und allenfalls zwischen zwei Paraffinschichten, Raum und Gelegenheit zum Abfliessen. Es können keine Öllachen mehr liegen bleiben, da sich keine waagrechte Schichtung bilden kann. Dies verkürzt die notwendigen Stufenzeiten Die durchlässigen Strukturen können siebartige, bürstenartige, gitter- oder raumgitterartige Strukturen sein. Die durchlässigen Strukturen lassen einerseits die Ablauföle oder die flüssigen Anteile des Gatsches durch, halten aber das feste Paraffin an seinem Ort. Sie erlauben eine fraktionierte Kristallisation in statischen Plattenkristallisatoren auch von Gatschen mit einem Ölanteil von über 15 Gewichtsprozenten.

Vorteilhaft weisen solche Strukturen Leitelemente auf, deren Neigungswinkel so gewählt ist, dass sich während der Erwärmung eine selbsttätige Nachführung des Festansatzes an eine Wärmetauscherfläche durch das Eigengewicht des Festansatztes einstellt. Durch die Nachführung bleibt der Festansatz in thermischem Kontakt mit der Wärmetauscherfläche. Vorteilhaft steht eine solche durchlässige Struktur in thermischem Kontakt mit den Wärmetauscherflächen, damit insbesondere in der Schmelzphase die Wärmeübertragung von den Wärmetauscherflächen auf den von den Wärmetauscherflächen gelösten, auf der durchlässigen Struktur liegenden Festansatz optimal ist.

Vorteilhaft sind die Leitelemente den Raum zwischen den Wärmetauscherflächen etwa horizontal gliedernde, geneigte Flächen, und bevorzugt übereinander angeordnete geneigte Flächen gegenläufig geneigt. Solche Flächen sind sehr einfach herstellbar und einbaubar, unterteilen die Schicht des Festansatzes in horizontale Streifen entlang den Wärmetauscherflächen mit vergrösserter schwitzfähiger Oberfläche und können aus verschiedensten Materialien und mit unterschiedlichster Prägung, Lochung oder Stanzung gefertigt werden. Diese Flächen dienen als Leitelemente mit nachführenden Eigenschaften. Die gegenläufige Neigung bewirkt eine gleichmässige, beidseitige Nachführung des Festansatzes gegen die Wärmetauscherflächen.

Vorzugsweise ist die durchlässige Struktur in Einbaueinheiten zusammengefasst, welche zwischen zwei Kristallisationsflächen eingebaut werden können. Sie ist dadurch einfach herstellbar und einbaubar. Vorzugsweise ist die siebartige Struktur durch ein mehrfach zickzackförmig abgekantetes Metallelement gebildet. Metall bietet die notwendige Wärmeleitfähigkeit und die vorteilhafte einfache Bearbeitbarkeit. Die Zickzackform ist durch Biegen des Elements leicht herstellbar und weist die bevorzugten Eigenschaften auf, wie sie oben beschrieben wurden. Das Metallelement kann ein abgekantetes Lochblech, aber auch ein Stabgitter oder ein Netz oder dergleichen sein. Lochbleche gibt es im Handel in einer grossen Vielfalt von verschiedenen Lochungen. Vorteilhaft wird ein Perforationsmuster gewählt, bei welchem das Muster derart ineinander greift, dass bei jeder möglichen Anordnung der Faltlinie, diese durch Öffnungen in der durchlässigen Struktur verläuft.

Es kann auch zweckmässig sein, dass die für flüssige Fraktionen und Öle durchlässige Struktur durch die Wärmetauscherflächen selbst gebildet ist. Dadurch ist ein besserer Wärmeübergang zwischen dem Wärmetransfermedium und der durchlässigen Struktur und dadurch der Schmelze bzw. dem Festansatz gewährleistet, als wenn die Wärmetauscherflächen und die durchlässige Struktur zwei voneinander unabhängige Teile sind.

Vorteilhaft unterteilen die Wärmetauscher den Behälter in Raumzonen, welche so dimensioniert sind, dass im Behälter befindliche Schmelze durchgehend einen kleinen Abstand zur nächstliegenden Wärmetauscherfläche aufweist. Dadurch erübrigt sich eine Wasservorgabe, denn der gesamte Raum des Behälters ist in engem Einflussbereich der Wärmetauscherflächen. Auch ist das Verhältnis zwischen Wärmetauscherflächen und Volumen der Schmelze günstig für eine präzises und rasches Kühlen und Heizen.

Die notwendigen Batch-Zeiten oder Stufenzeiten können in einer solchen Anlage von bisher 30 bis 40 Stunden signifikant verkürzt werden. Dadurch ist
⇒ die Effektivität der Anlage erhöht und
⇒ die Selektivität deutlich verbessert, was
⇒ die Ausbeute an hochwertigem Paraffin erhöht.

Das erfindungsgemässe Verfahren weist gegenüber dem Schwitzverfahren zudem folgende Vorteile auf:
⇒ Die Verarbeitung von Gatschen mit relativ hohen Ölgehalten ist möglich.
⇒ Dadurch können die Ablauföle durch partielle Gewinnung ihrer Paraffinanteile höherwertig verwertet werden, und daher
⇒ ist die Ausbeute insgesamt wesentlich verbessert.

Bemerkenswert ist die auch gegenüber der Lösemittelentölung erhöhte Ausbeute von Paraffinen in der geforderten Qualität.

Zweckmässigerweise wird das erfindungsgemässe Verfahren sowohl zur Gewinnung und Reinigung von Paraffinen und Paraffinfraktionen aus Mineralölgatschen als auch aus paraffinhaltigen Schmelzen synthetischen Ursprungs (Fischer-Tropsch-Synthese) oder aus durch thermischen Abbau von Kunststoffen gewonnenen Schmelzen (Recyclat-Paraffine) verwendet. Das Verfahren wird zweckmässigerweise auch auf entsprechende Gemische angewendet.

Nachfolgend werden als Beispiele verschiedene Gatsche in drei Tabellen vergleichend dargestellt. Verglichen werden die Resultate des heute gebräuchlichen Lösemittelverfahrens mit den Resultaten der Paffinentölung durch fraktionierte Kristallisation gemäss dem erfindungsgemässen Verfahren (letzte Spalte) und des bekannten Schwitzverfahrens. Die Vergleichswerte sind der Erstarrungspunkt in Grad Celsius nach DIN-ISO 2207, der Ölgehalt in Gewichtsprozenten nach DIN-ISO 2908, der Nadelpenetrationswert bei 25°C in 0,1 mm nach DIN 51 579 und die Ausbeuten:

### Beispiel 1:

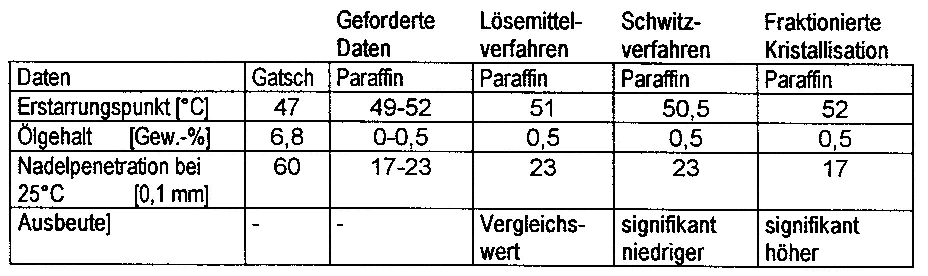

### Beispiel 2:

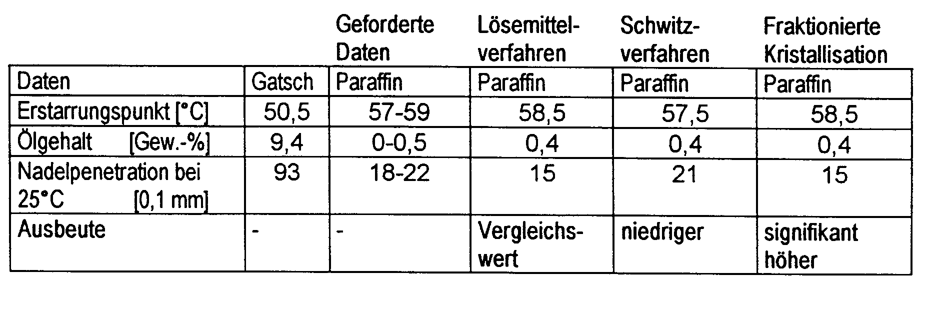

### Beispiel 3:

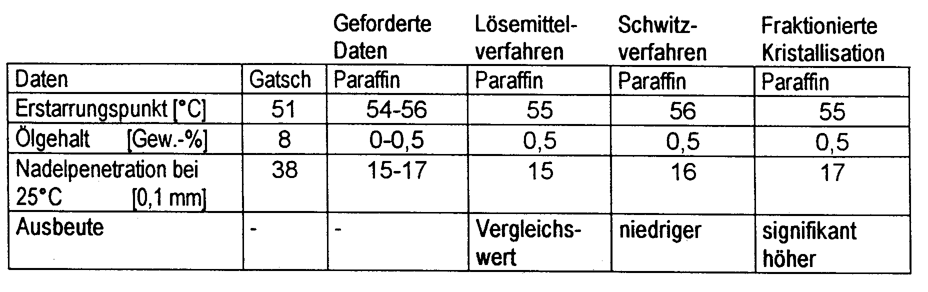

Auffällig bei den drei Beispielen sind die deutlich höheren Ausbeuten mit der erfindungsgemässen Kristallisation als mit den beiden Vergleichsverfahren. Während die Werte für den Erstarrungspunkt des Endprodukts beim erfindungsgemässen Kristallisationsverfahren den Werten beim Lösemittelverfahren ähnlich sind (der bessere Wert im Beispiel 1 sei dabei nicht übersehen) und der Ölgehalt bei allen Beispielen keine verfahrensabhängigen Unterschiede aufweist, fällt der Nadelpenetrationswert abhängig von Gatschqualität und angewendetem Verfahren unterschiedlich aus. Die mit dem erfindungsgemässen Verfahren gereinigten Paraffine weisen aber nie einen schlechteren als den geforderten Wert auf. Im Beispiel 2 liegt der Nadelpenetrationswert wie beim Lösemittelverfahren unterhalb der geforderten Limite, und ist damit besser als gefordert. Zusammenfassend kann gesagt werden, dass mit dem erfindungsgemässen Verfahren gegenüber den bekannten Verfahren, bei mindestens gleichwertiger Qualität des Endproduktes, die Ausbeute wesentlich erhöht wird. Das Verfahren weist darüber hinaus weder die wesentlichen Nachteile der Schwitzentölung (lange Batch-Zeiten, geringe Selektivität, Verarbeitung nur von Gatschen mit relativ niedrigem Ölgehalt, schlechte Verwertung der Ablauföle) noch die der Lösemittelentölung (Umwelt- und Gesundheitsgefährdung, hohe Instandhaltungskosten wegen der Anlagenkorrosion, hohe Betriebskosten durch die Lösemittelrückgewinnung und die Kühlung, niederwertige Verwertung der Ablauföle) auf.

Nachfolgend werden Ausführungsbeispiele der Erfindung unter Bezugnahme auf die Figuren beschrieben. Es zeigt:
- Fig. 1: einen dem Stand der Technik entsprechenden Kristallisator für die statische Kristallisation, perspektivisch und zum Teil aufgeschnitten dargestellt,
- Fig. 2: einen schematischen Vertikalschnitt durch einen erfindungsgemäss bestückten Kristallisator,
- Fig. 3: Detail des Berührungspunktes der Einbaute mit der Kristallisationswandung,
- Fig. 4: Aufsicht auf die in Figur 3 gezeigte Stelle,
- Fig. 5: einen schematischen Vertikalschnitt durch einen erfindungsgemässen Kristallisator, relativ zum Schnitt in Fig. 3 um 90 Grad gedreht,
- Fig. 6: eine mögliche Ausgestaltung der Paraffinschicht nach abgeschlossener Kristallisation,
- Fig. 7: Paraffinschicht nach Figur 6 während des Schwitzens,
- Fig. 8: eine weitere mögliche Ausgestaltung der Paraffinschicht nach der abgeschlossenen Kristallisation,
- Fig. 9: Paraffinschicht nach Figur 8 während des Schwitzens.

Der Übersichtlichkeit wegen werden im folgenden entsprechende Teile unterschiedlicher Kristallisatoren mit der gleichen Bezugsziffer bezeichnet, auch wenn die Ausführungsformen der Teile sich unterscheiden können.

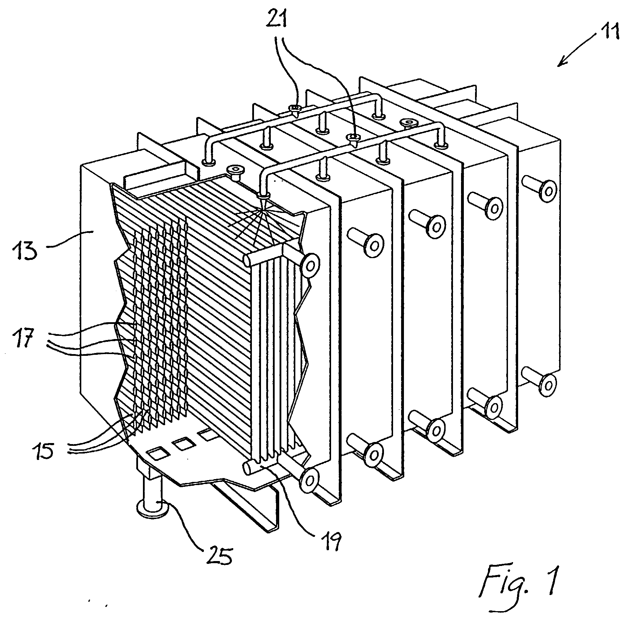

Ein Kristallisator 11 für die statische Kristallisation weist, wie in Figur 1 dargestellt, einen Behälter 13 zur Aufnahme der Schmelze oder des Gatsches und in diesem Behälter 13 mit Abstand zueinander eine Anzahl von kühl- und heizbaren Wärmetauscherwänden 15 auf, die vom Gatsch umschliessbar sind. Die Wärmetauscherwände 15 weisen in ihrem Innern von einem Wärmetransfermedium durchfliessbare Kanäle 17 auf, die mit einer Verteilbatterie 19 verbunden sind. Durch die Wärmetauscher 15 sind schichtförmige Zonen 18 mit einer konstanten Dicke zwischen den Wärmetauscherflächen gebildet.

Eine Schmelze oder ein Gatsch wird über Einläufe 21 in den Behälter 13 eingespeist, wo er an den gekühlten Wärmetauscherwänden 15 in Fraktionen schichtformig auskristallisiert. Die nach der Verfestigung der zu gewinnenden Fraktionen verbleibende flüssige Phase wird über Ausläufe 25 abgelassen, danach werden durch Erwärmen der Wärmetauscherwände im Kristallisat vorhandene Fraktionen und Restmengen unerwünschter Substanzen ausgeschwitzt und ebenfalls abgelassen, um schliesslich das durch dieses Verfahren reiner gewordene Kristallisat separat abzuschmelzen und aufzufangen.

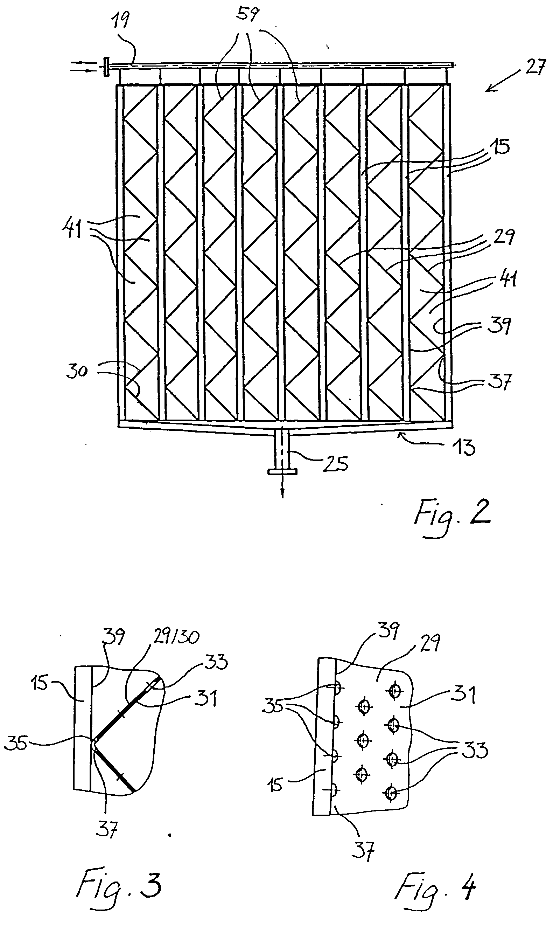

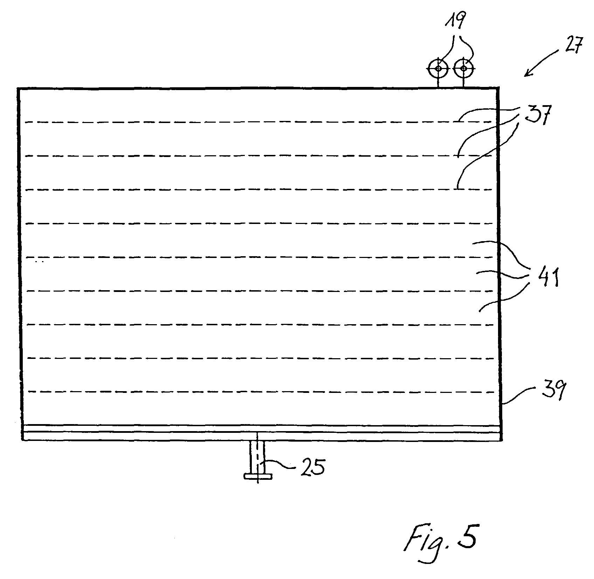

Eine Ausführungsform 27 des erfindungsgemässen Kristallisators ist in den Figuren 2 und 5 vereinfacht dargestellt. Zwischen den Wärmetauscherwänden 15 im Innern des Behälters 13 sind durchlässige Strukturen 29 angeordnet. Diese Strukturen sind aus Lochblechen 31 gefertigt (Figur 3 und 4). Die Lochung 33 der Lochbleche 31 dient der Durchlässigkeit der Strukturen 29 für die flüssige Phase. Das Lochblech 31 ist im Zickzack gefaltet, so dass benachbarte Kanten 37 gegenüberliegende Wärmetauscherflächen 39 berühren. Die Kanten 37 verlaufen praktisch horizontal (Figur 5). Eine Lochreihe 35 ist an der Lochblechkante 37 angeordnet, damit auch in den am tiefsten liegenden Bereichen der dreikantigen Zonen 41 die flüssige Phase ablaufen kann.

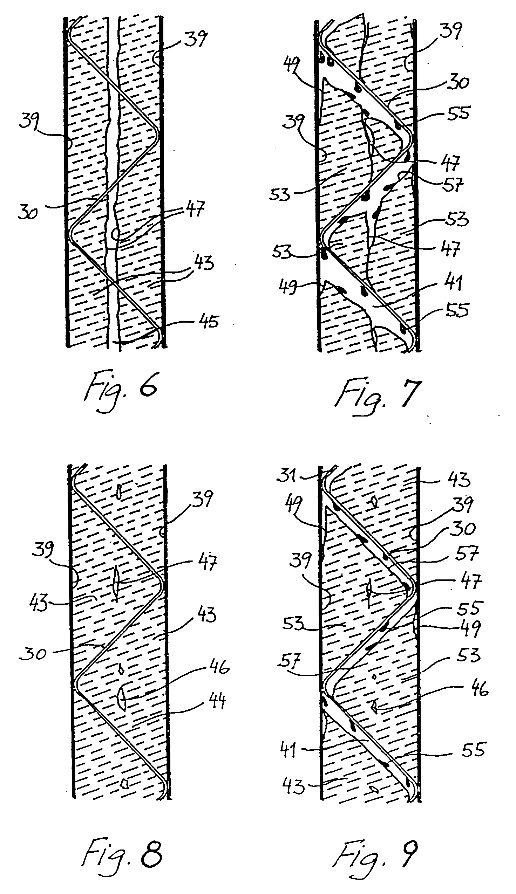

Wird nun in diesem Kristallisator 27 eine paraffinhaltige Schmelze entölt, so bildet sich, wie in den Figuren 6 bis 9 dargestellt, auf den gekühlten Wärmetauscherflächen 39 eine Paraffinschicht 43. Zwischen den beiden Paraffinschichten 43 bleibt je nach Ausgangsprodukt, bzw. Reinheitsgrad der Schmelze und darauf abgestellten Mengen abzulassender Flüssigbestandteile, teilweise ein Zwischenraum 45 offen, über den die flüssigen Fraktionen - welche einen hohen Ölanteil aufweisen - abgelassen werden, oder die beiden Schichten 43 wachsen zu einer einzigen Schicht 44 zusammen, wobei zwischen den Schichten Einschlüsse 46 von flüssigen Fraktionen und Ölen möglich sind (Fig. 8 und 9). Die flüssig verbliebenen Bestandteile werden nun soweit möglich abgelassen. In der Schwitzphase werden zuerst die öligen oder niedrigschmelzenden Fraktionen durch die Oberflächen 47, 49, 57 der Paraffinschichten 43 ausgeschwitzt. Sobald die Paraffinschicht 43, 44 durch die Erwärmung aufgeweicht ist, ist ihre Haftfähigkeit an der Wärmetauscherfläche 39 reduziert. Spätestens, wenn durch die Erwärmung die haftende Oberfläche 49 des Festansatzes 43 angeschmolzen wird, lösen sich Teile 53 des Festansatzes oder der Paraffinschicht 43 von der Wärmetauscherfläche 39. Diese Teile 53 bleiben im in spitzem Winkel auf die Wärmetauscherfläche 39 stossenden Lochblech 31 hängen. Durch die Ablösung von der Wärmetauscherfläche 39 und dem Lochblech 31 wird die schwitzfähige Oberfläche der Paraffinschicht 43 vergrössert. Die flüssige Phase 55 kann an den Oberflächen 47 und 49 austreten. Das Austreiben der flüssigen Phase 55 wird zudem durch die Last des Eigengewichts des Paraffinstückes 53 begünstigt. Die flüssige Phase 55 tropft zwischen den Paraffinstücken 53 ab. Zum Teil läuft die flüssige Phase 55 entlang den Wärmetauscherflächen 39 ab. Die wärmetauscherseitige Oberfläche 49 der Paraffinstücke 53 kann durch die Zufuhr von Wärme angeschmolzen werden, so dass die flüssige Phase 55 Kanäle findet oder sich diese zwischen Wärmetauscherfläche 39 und Paraffinschicht 43 freischmilzt und durch die Öffnungen 35 an den die Wärmetauscherflächen 39 berührenden Kanten 37 der Lochbleche 31 abfliessen. Flüssige Fraktionen und Öle 55, die auf Paraffinstücke 53 fallen, laufen über die geneigte Oberfläche 57 des Festansatzes oder Paraffinstücks 53 ab und tropfen durch Löcher 33 im Lochblech 31 hindurch in die nächstuntere dreikantige Zone 41. Nach Abschluss der Schwitzphase wird der Festansatz 53 fraktionenweise abgeschmolzen.

## Patentansprüche

1. Verfahren zur Gewinnung von Paraffinen oder Paraffinfraktionen aus einer paraffinhaltigen Schmelze, insbesondere aus Gatsch oder einem unterschiedliche Paraffinfraktionen aufweisenden Gemisch, bei welchem Verfahren in einem mit Wärmetauschern ausgestatteten Behälter die Schmelze auf eine Temperatur unter der Schmelztemperatur der zu gewinnenden Paraffinfraktionen abgekühlt wird und flüssige niedrigschmelzende Fraktionen und Öle von durch die Abkühlung verfestigten höherschmelzenden Paraffinfraktionen abgetrennt und abgeleitet werden, **dadurch gekennzeichnet, dass** die Temperatur der Wärmetauscherflächen (39) während des Abkühlens der vorerst noch flüssigen Schmelze höher gewählt wird als die Schmelztemperatur eines wesentlichen Teils abzuleitender niedrigschmelzender Fraktionen und Öle, und dass nach der Bildung eines Festansatzes (43, 53) an den Wärmetauscherflächen (39) aus höherschmelzenden Fraktionen die flüssig verbliebenen niedrigschmelzenden Fraktionen und Öle aus dem Behälter (13) abgeleitet werden.

2. Verfahren nach Anspruch 1, dadurch gekennzeichnet, dass die sich verfestigenden Fraktionen in Schichten (43) auf im Wesentlichen vertikalen oder geneigten Wärmetauscherflächen (39) aus der Schmelze ausgeschieden werden.

3. Verfahren nach Anspruch 2, dadurch gekennzeichnet, dass die Schichten (43) auf im Wesentlichen ebenflächigen Wärmetauscherflächen (39) ausgeschieden werden.

4. Verfahren nach einem der Ansprüche 1 bis 3, bei welchem durch Erwärmen von durch die Abkühlung verfestigten Fraktionen niedrigschmelzende Fraktionen und Öle aus dem Festansatz ausgetrieben werden, dadurch gekennzeichnet, dass der verbleibende Festansatz (43, 53) bei der Erwärmung unter Nutzung seines Eigengewichts auf eine Wärmetauscherfläche (39) zugetrieben wird.

5. Verfahren nach einem der Ansprüche 1 bis 4, bei welchem durch Erwärmen von durch die Abkühlung verfestigten Fraktionen niedrigschmelzende Fraktionen und Öle aus dem Festansatz ausgetrieben werden, dadurch gekennzeichnet, dass der verbleibende Festansatz(43,53) im Zuge der Erwärmung in voneinander gesonderte Streifen (53) aufgelöst wird.

6. Verfahren nach Anspruch 4 oder 5, dadurch gekennzeichnet, dass der verbleibende Festansatz (43,53) von den Wärmetauscherflächen (39) wenigstens teilweise auf Leitelemente (30) abgelöst wird, welche den Wärmetauscherflächen (39) zugeneigt sind.

7. Verfahren nach Anspruch 6, dadurch gekennzeichnet, dass die Schichten (43) durch Erwärmen der Wärmetauscherflächen (39) von diesen gelöst werden und durch die Leitelemente (30) in voneinander gesonderte Streifen (53) unterteilt werden.

8. Verfahren nach Anspruch 6 oder 7, dadurch gekennzeichnet, dass die durch Erwärmen des Festansatzes (43,53) ausgetriebenen Bestandteile (55) teilweise durch besondere Leitwege (33,35) im Leitelement (30) nach unten abgeleitet werden.

9. Verfahren nach einem der Ansprüche 4 bis 8, dadurch gekennzeichnet, dass die Schichten (43) durch die Leitelemente (30) in Streifen (53) aufgeteilt werden.

10. Verfahren nach einem der Ansprüche 1 bis 3, bei welchem durch Erwärmen von durch die Abkühlung verfestigten Fraktionen niedrigschmelzende Fraktionen und Öle aus dem Festansatz ausgetrieben werden, dadurch gekennzeichnet, dass die Schichten (43) in solchen Stärken ausgeschieden werden, dass ihre Haftung an den Wärmetauscherflächen (39) beim Erwärmen ausreicht, sie zu halten.

11. Verfahren nach einem oder mehreren der vorangehenden Ansprüche, dadurch gekennzeichnet, dass eine Schmelze zuerst mit einem Verfahren nach einem der Ansprüche 1 bis 9 entölt wird und die dadurch gewonnenen Fraktionen danach in einem Verfahren nach Anspruch 10 weiter gereinigt oder fraktioniert wird.

12. Verfahren nach einem der Ansprüche 1 bis 10, dadurch gekennzeichnet, dass abgelassene tiefschmelzende Fraktionen (55) und/oder Öle erneut einem Verfahren nach einem der Ansprüche 1 bis 10 unterzogen werden.

13. Verfahren nach einem der Ansprüche 1 bis 12, dadurch gekennzeichnet, dass der Festansatz (43,53) fraktioniert abgeschmolzen wird.

14. Verfahren nach einem der Ansprüche 1 bis 13, dadurch gekennzeichnet, dass die Schmelze in einen leeren Behälter (13) eingefüllt wird.

15. Vorrichtung zur Gewinnung von Paraffinen oder Paraffinfraktionen aus einer paraffinhaltigen Schmelze, bestehend aus einem mit Wärmetauschern ausgestatteten Behälter, wobei die Wärmetauscher im Wesentlichen vertikal ausgerichtete Wärmetauscherflächen aufweisen, zur Trennung von durch Kühlen der Schmelze sich an den Wärmetauscherflächen als Festansatz abscheidenden höherschmelzenden Paraffinfraktionen von durch Erwärmen aus dem Festansatz austreibbaren niedrigschmelzenden Fraktionen und Ölen, dadurch gekennzeichnet, dass zwischen den Wärmetauscherflächen (39) eine für flüssige Bestandteile (55) durchlässige Struktur (29) angeordnet ist, welche ein Abrutschen des Festansatzes (43,53) während des Erwärmens verhindert.

16. Vorrichtung nach Anspruch 15, dadurch gekennzeichnet, dass die Wärmetauscherflächen (39) im Wesentlichen ebenflächig sind.

17. Vorrichtung nach Anspruch 15 oder 16, dadurch gekennzeichnet, dass die durchlässige Struktur (29) den Wärmetauscherflächen (39) zugeneigte Leitelemente (39) aufweist.

18. Vorrichtung nach Anspruch 17, dadurch gekennzeichnet, dass der Neigungswinkel der Leitelemente (30) so gewählt ist, dass sich während der Erwärmung eine selbsttätige Nachführung des Festansatzes (43,53) an eine Wärmetauscherfläche (39) durch das Eigengewicht des Festansatztes (43,53) einstellt.

19. Vorrichtung nach einem der Ansprüche 15 bis 18, dadurch gekennzeichnet, dass die Leitelemente (30) den Raum zwischen den Wärmetauscherflächen (39) etwa horizontal gliedernde, geneigte Flächen (30) sind.

20. Vorrichtung nach Anspruch 19, dadurch gekennzeichnet, dass übereinander angeordnete geneigte Flächen (30) gegenläufig geneigt sind.

21. Vorrichtung nach einem der Ansprüche 15 bis 20 dadurch gekennzeichnet, dass die Wärmetauscher (15) den Behälter (13) in Raumzonen (18) unterteilen, welche so dimensioniert sind, dass im Behälter (15) befindliche Schmelze durchgehend einen kleinen Abstand zur nächstliegenden Wärmetauscherfläche (39) aufweist.
